# FASCICULE DE BREVET EUROPEEN

(11) **EP 0 592 317 B1**
(45) Date de publication et mention de la délivrance du brevet: **18.09.1996**
(21) Numéro de dépôt: 93402471.2
(22) Date de dépôt: 07.10.1993
(51) Int. Cl.: B64C 1/14

(54) **Issue de secours à double configuration pour l'évacuation terrestre et après amerrissage d'une cabine d'aéronef**
Notausstieg mit einer Doppelkonfiguration zur Notevakuierung des Flugzeugs nach der Landung auf dem Bodem oder im Meer
Double configuration emergency exit to abandon the aircraft after landing on ground or water

(30) Priorité: 09.10.1992 FR 9212033
(43) Date de publication de la demande: 13.04.1994
(73) Titulaire: AEROSPATIALE Société Nationale Industrielle, F-75781 Paris Cédex 16 (FR)
(72) Inventeur: Poccard, Jacques, F-31530 Montaigut sur Save (FR)
(74) Mandataire: Dubois-Chabert, Guy

(56) Documents cités:
- EP-A- 0 440 094
- FR-A- 1 042 885
- US-A- 4 453 684

## Description

L'invention concerne une issue de secours pour cabine d'aéronef apte à occuper deux configurations différentes permettant l'évacuation de la cabine aussi bien sur terre qu'après un amerrissage.

Une issue de secours conforme à l'invention peut être utilisée sur tous les types d'aéronef. Cependant, elle est plus particulièrement adaptée aux appareils comportant une voilure située au-dessus du fuselage, car les impératifs fixés pour l'évacuation des passagers sur terre et en mer sont alors généralement incompatibles.

Les règlementations internationales imposent aux issues de secours équipant les aéronefs destinés au transport des passagers un certain nombre de contraintes concernant leurs dimensions et leur positionnement sur le fuselage de l'aéronef. Ces contraintes ne sont pas les mêmes, selon que l'issue de secours est destinée à évacuer les passagers sur terre ou après un amerrissage.

Plus précisément, dans le cas d'une issue de secours destinée à l'évacuation terrestre des passagers, les dimensions minimales de l'ouverture sont d'environ 1,12 m (44 pouces) pour la hauteur et d'environ 0,51 m (20 pouces) pour la largeur. Pour une issue dont le seuil doit se situer nécessairement au niveau du plancher de la cabine, ou d'environ 0,914 m (36 pouces) pour la hauteur et d'environ 0,51 m (20 pouces) pour la largeur dans le cas d'une issue dont le seuil peut se situer au-dessus du plancher de la cabine mais à une hauteur inférieure ou égale à 0,51 m (20 pouces) par rapport au plancher de la cabine. La hauteur maximale du seuil de ces issues par rapport au sol doit être de 1,8 m lorsque l'issue de secours n'est pas située au-dessus d'une voilure ou ne dispose pas d'un toboggan d'évacuation.

Par ailleurs, la règlementation relative aux issues de secours destinées à permettre l'évacuation des passages après un amerrissage fixe les dimensions minimales de l'ouverture à environ 0,92 m (36 pouces) pour la hauteur et à environ 0,51 m (20 pouces) pour la largeur. Le seuil d'une telle issue de secours est généralement situé au-dessus du plancher de la cabine, a une hauteur maximale d'environ 0,51 m (20 pouces). En outre, en évacuation terrestre, la hauteur maximale du seuil par rapport au sol est de 1,8 m lorsque l'issue de secours n'est pas située au-dessus d'une voilure ou ne dispose pas d'un toboggan d'évacuation.

Dans le cas d'une issue de secours destinée à l'évacuation des passagers en cas d'amerrissage forcé, il faut en outre, pour qu'elle soit utilisable, que son seuil soit situé au-dessus de la ligne de flottaison de l'appareil.

Dans l'état actuel de la technique, il n'existe pas d'issue de secours apte à présenter deux configurations différentes selon que l'évacuation des passagers doit être effectuée sur terre ou en mer.

Par ailleurs, il est exigé que l'ouverture d'une issue de secours s'effectue en une "seule opération simple et évidente".

Le document EP-A-0 440 094 décrit une porte d'immeuble formée d'un panneau inférieur et d'un panneau supérieur normalement liés l'un à l'autre par un mécanisme qui soulève le panneau inférieur, de telle sorte que les deux panneaux puissent être ouverts simultanément, en agissant sur la poignée de la porte. En cas d'incendie, le mécanisme est actionné et libère le panneau inférieur, qui descend pour se verrouiller sur l'huisserie et obturer de façon étanche le bas de l'ouverture, en vue de retenir l'eau d'extinction de l'incendie.

Par ailleurs, le document US-A-4 453 684 décrit une porte d'aéronef dont un panneau supérieur bascule extérieurement vers le haut et dont un panneau inférieur portant une marche bascule extérieurement vers le bas, lors de l'ouverture.

L'invention a précisément pour objet une issue de secours capable de présenter deux configurations différentes afin de permettre l'évacuation d'une cabine d'aéronef aussi bien sur terre qu'après un amerrissage, en satisfaisant à la réglementation.

Conformément à l'invention, ce résultat est obtenu au moyen d'une issue de secours à double configuration, conforme à la revendication 1.

Le moyen de verrouillage secondaire est normalement déverrouillé en vol, de telle sorte qu'après un atterrissage forcé, l'issue de secours présente une configuration dans laquelle les deux éléments de la porte s'ouvrent lorsqu'on manoeuvre le moyen de verrouillage principal.

Si un risque d'amerrissage forcé est détecté, le personnel de bord verrouille le moyen de verrouillage secondaire. La manoeuvre, après amerrissage, du moyen de verrouillage principal, se traduit donc par l'ouverture du seul élément supérieur de la porte.

Dans un mode de réalisation préféré de l'invention, l'élément inférieur est articulé sur un bord horizontal inférieur de l'encadrement, de façon à pouvoir pivoter vers l'extérieur de l'aéronef, après effacement d'au moins une surface d'ancrage formée sur un bord horizontal inférieur de l'élément supérieur, lorsque le moyen de verrouillage secondaire est déverrouillé.

Par ailleurs, l'élément supérieur est articulé sur l'encadrement, à proximité de l'élément inférieur, de façon à pouvoir pivoter vers l'intérieur de l'aéronef, lorsque le moyen de verrouillage principal est libéré, l'effacement d'au moins une surface d'ancrage étant assuré par un pivotement de l'élément supérieur au-delà d'un angle prédéterminé.

Dans ce mode de réalisation préféré, l'élément supérieur est articulé sur l'encadrement par des mécanismes à tourillons permettant d'extraire cet élément supérieur de l'encadrement, après un pivotement supérieur audit angle prédéterminé.

Avantageusement, l'élément inférieur comporte, sur son bord inférieur et sur son bord supérieur, au moins une butée apte à venir en appui contre une surface de l'encadrement tournée vers l'intérieur de la cabine et contre ladite surface d'ancrage, respectivement, sous l'effet de la pression interne de la cabine.

De façon analogue, l'élément supérieur comporte avantageusement, sur son bord supérieur et sur chacun de ses bords latéraux, au moins une butée, normalement appliquée contre une surface de l'encadrement tournée vers l'intérieur de la cabine, sous l'effet de la pression interne de cette dernière.

Dans ces conditions, la porte de l'issue de secours est maintenue en place, plaquée contre ses appuis du fuselage, par la pression interne de la cabine.

Le moyen de verrouillage principal est accessible à la fois de l'intérieur et de l'extérieur de l'aéronef, alors que le moyen de verrouillage secondaire est seulement accessible depuis l'intérieur de l'aéronef.

On décrira à présent, à titre d'exemple non limitatif, un mode de réalisation préféré de l'invention, en se référant aux dessins annexés, dans lesquels :
- la figure 1 est une vue en coupe transversale partielle de la cabine d'un aéronef, faite au niveau d'une issue de secours réalisée conformément à l'invention ;
- la figure 2 est une vue, prise depuis l'intérieur de l'aéronef, représentant de face l'issue de secours illustrée sur la figure 1 ;
- la figure 3 est une vue en coupe transversale schématique comparable à la figure 1 représentant l'issue de secours des figures 1 et 2 dans la position qu'elle occupe après son ouverture en vue de l'évacuation terrestre des passagers ; et
- la figure 4 est une vue comparable à la figure 3 illustrant la position occupée par l'issue de secours lors de l'évacuation des passagers après un amerrissage.

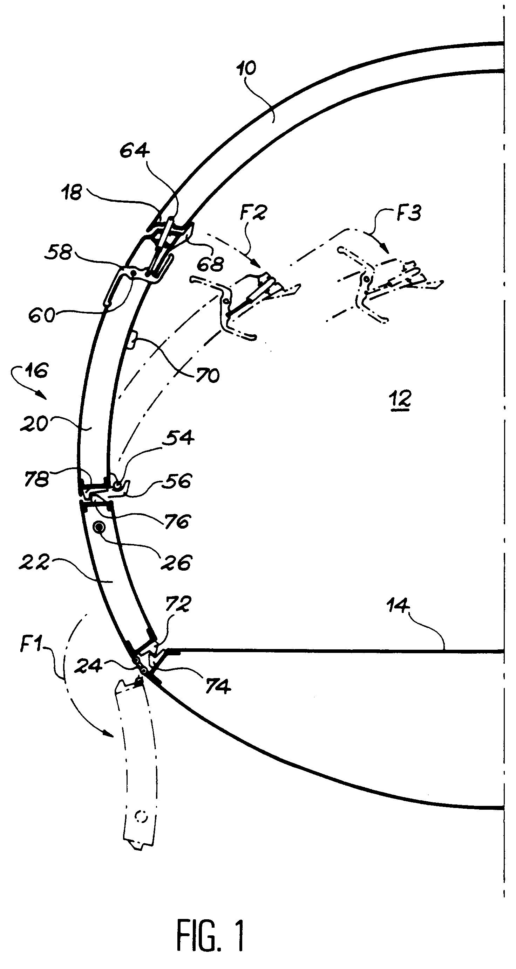

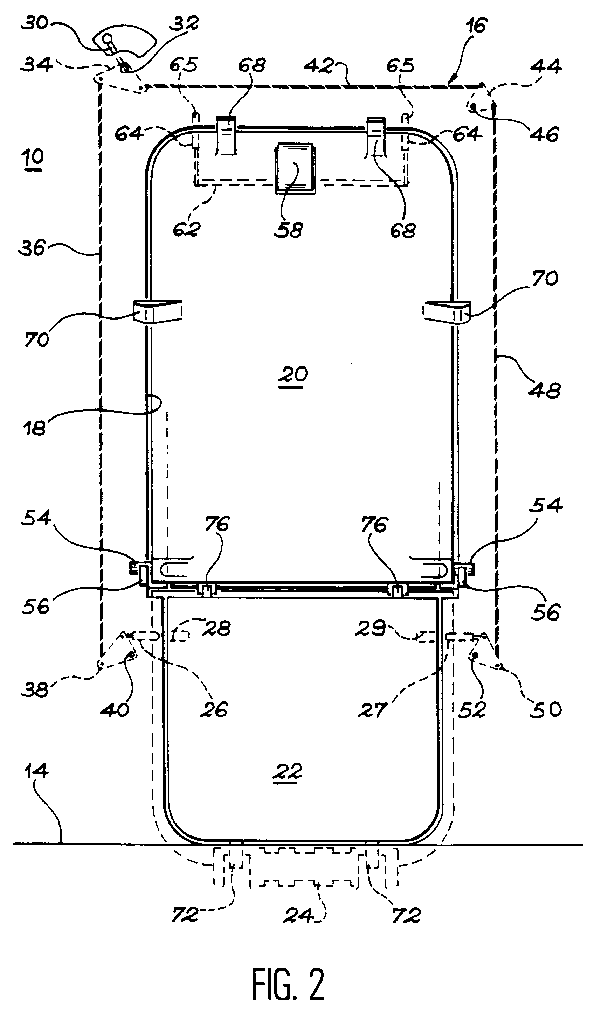

Sur les figures 1 et 2, la référence 10 désigne la partie du fuselage d'un aéronef délimitant la cabine 12 de ce dernier. Le plancher de la cabine 12 est désigné par la référence 14.

Les figures 1 et 2 représentent plus précisément une partie du fuselage équipée d'une issue de secours 16 réalisée conformément à l'invention.

Cette issue de secours 16 comporte un encadrement 18 qui fait partie intégrante du fuselage 10, de façon à définir dans ce dernier une ouverture de forme sensiblement rectangulaire, dont le bord horizontal inférieur est situé sensiblement au niveau du plancher 14 et dont le bord supérieur est situé, par exemple, environ 1,42 m (56 pouces) au-dessus de ce bord inférieur. La largeur de l'ouverture délimitée par l'encadrement 18 est, par exemple, d'environ 0,51 m (20 pouces).

L'issue de secours 16 conforme à l'invention comprend de plus une porte obturant normalement l'ouverture délimitée par l'encadrement 18 et qui se compose, conformément à l'invention, d'un élément supérieur 20 et d'un élément inférieur 22 totalement séparés. Comme on le verra plus en détail ultérieurement, l'agencement de ces deux éléments 20 et 22 constituant la porte de l'issue de secours 16 est réalisé de telle sorte qu'il est possible soit de n'ouvrir que l'élément supérieur 20, pour permettre l'évacuation des passagers après un amerrissage forcé, soit d'ouvrir en une seule opération l'élément supérieur 20 et l'élément inférieur 22, pour permettre l'évacuation terrestre de l'aéronef.

Dans le mode de réalisation préférentiel illustré sur les figures 1 et 2, la hauteur de l'élément supérieur 20 de la porte est d'environ 0,91 m (36 pouces), alors que la hauteur de l'élément inférieur 22 est d'environ 0, 51 m (20 pouces).

L'élément inférieur 22 de la porte de l'issue de secours 16 est articulé par son bord horizontal inférieur sur le bord horizontal inférieur de l'ouverture délimitée par l'encadrement, 18 au moyen d'une double charnière 24. Cette double charnière 24 présente deux axes d'articulation horizontaux et parallèles situés à proximité de l'enveloppe extérieure du fuselage 10 de l'aéronef. Cet agencement permet à l'élément inférieur 22 de la porte de l'issue de secours de s'ouvrir par gravité vers l'extérieur de l'aéronef, comme l'illustre schématiquement la flèche F1 sur la figure 1.

Le basculement de l'élément inférieur 22 vers l'intérieur de l'aéronef est empêché par la forme en gradin présentée en section par les bords latéraux de l'élément 22 et de la partie basse correspondante de l'ouverture délimitée par l'encadrement 18. En effet, cette forme est telle que la largeur de la partie de l'élément 22 tournée vers l'extérieur de l'aéronef est supérieure à la largeur de la partie correspondante de l'ouverture tournée vers l'intérieur de l'aéronef.

Le verrouillage de l'élément inférieur 22, utilisé pour évacuation après atterrissage, de la porte de l'issue de secours 16 est assuré par un moyen de verrouillage secondaire qui comprend, dans le mode de réalisation illustré sur la figure 2, deux pènes 26 et 27 aptes à coulisser selon un axe horizontal commun dans des rainures de guidage (non représentées) formées à cet effet dans l'encadrement 18, légèrement en dessous du bord horizontal supérieur de l'élément inférieur 22. Ces pènes 26, 27 peuvent occuper une position déverrouillée, illustrée sur la figure 2, dans laquelle ils sont totalement escamotés à l'intérieur des rainures et libèrent l'élément inférieur 22, ainsi qu'une position verrouillée, dans laquelle ils pénètrent dans des gâches 28, 29 montées dans les bords latéraux de l'élément inférieur 22.

La commande du déplacement simultané des pènes 26,27 entre leur position verrouillée et leur position déverrouillée est assurée, par exemple, par une manette 30 accessible depuis l'intérieur de la cabine de l'aéronef. La manette 30 est montée pivotante sur le fuselage 10 par un axe 32 et elle est solidaire d'une pièce d'ancrage triangulaire 34. La poignée 30 et la pièce d'ancrage 34 sont montées dans le fuselage 10 au-dessus et sur le côté de l'ouverture délimitée par l'encadrement 18.

Une première tige de liaison 36 est articulée par l'une de ses extrémités sur la pièce d'ancrage 34 et s'étend vers le bas pour être articulée par son extrémité inférieure sur une pièce d'ancrage 38, également triangulaire, montée pivotante par un axe 40 dans le fuselage 10, à proximité du pène 26. Ce dernier est lui-même articulé avec un certain jeu sur la pièce d'ancrage 38, de telle sorte qu'un déplacement de la manette 30 entre sa position de déverrouillage illustrée sur la figure 2 et sa position de verrouillage permet de déplacer le pène 26 entre sa position déverrouillée, telle qu'illustrée sur la figure 2, et sa position verrouillée, dans laquelle il pénètre dans la gâche 28 correspondante.

Une première extrémité d'une deuxième tige de liaison 42 est également fixée à la pièce d'ancrage 34. A partir de cette dernière, la tige de liaison 42 s'étend sensiblement horizontalement au-dessus de l'ouverture délimitée par l'encadrement 18, et son extrémité opposée est articulée sur une pièce intermédiaire 44, montée pivotante dans le fuselage 10 par un axe 46, sensiblement à la verticale du deuxième pène 27.

L'extrémité haute d'une troisième tige de liaison 48 est articulée sur la pièce intermédiaire 44 et cette tige de liaison 48 se prolonge vers le bas dans le fuselage 10, à l'opposé de la tige de liaison 36 par rapport à l'ouverture délimitée par l'encadrement 18. L'extrémité basse de la tige de liaison 48 est articulée sur une pièce d'ancrage 50, de forme triangulaire, montée pivotante par un axe 52 à l'intérieur du fuselage 10, à proximité du deuxième pène 27. Ce dernier est lui-même articulé avec un certain jeu sur la pièce d'ancrage 50, de telle sorte qu'un déplacement de la manette 30 entre sa position déverrouillée et sa position verrouillée a également pour effet de déplacer ce deuxième pène 27 entre sa position déverrouillée illustrée sur la figure 2 et sa position verrouillée, dans laquelle il pénètre dans la gâche 29.

L'élément supérieur 20 de la porte de l'issue de secours 16 est articulé, à proximité de son bord horizontal inférieur, sur les bords latéraux de l'encadrement 18, autour d'un axe horizontal, de façon à pouvoir pivoter vers l'intérieur de la cabine de l'aéronef à partir de sa position fermée illustrée sur les figures 1 et 2.

Cette articulation est assurée par deux butées. Ces butées comprennent deux tourillons coaxiaux 54 qui font saillie latéralement de part et d'autre de l'élément supérieur 20, au-delà de l'enveloppe intérieure du fuselage 10, de façon à reposer normalement sur deux crochets d'ancrage 56 fixés aux bords latéraux de l'encadrement 18, juste au-dessus de l'élément inférieur 22 de la porte. Ces deux crochets d'ancrage 56 font saillie vers l'intérieur du fuselage 10 et s'ouvrent vers le haut pour recevoir les tourillons 54. Comme on l'a illustré en traits mixtes sur la figure 1, cet agencement permet à l'élément supérieur 20 de basculer vers l'intérieur de la cabine 12 à partir de sa position fermée (flèche F2), puis d'être extrait des crochets d'ancrage 56 (flèche F3) lorsque l'ouverture de l'issue de secours est désirée.

L'échappement de l'élément supérieur 20 de la porte de l'issue de secours vers l'extérieur de l'aéronef est empêché par la forme complémentaire présentée en section par les bords latéraux et supérieur de cet élément supérieur et par les bords correspondants de l'ouverture formée dans l'encadrement 18. Plus précisément, ces bords présentent une section en gradin telle que la partie de l'élément supérieur 20 tournée vers l'intérieur de l'aéronef soit plus large que la partie correspondante de l'ouverture tournée vers l'extérieur de l'aéronef.

L'ouverture et la fermeture de l'issue de secours sont commandées par un moyen de verrouillage principal accessible depuis l'intérieur et depuis l'extérieur de l'aéronef.

Dans le mode de réalisation illustré sur la figure 1, ce moyen de verrouillage principal comprend une double poignée 58, montée pivotante dans la partie haute de l'élément supérieur 20 par un axe horizontal 60 orienté parallèlement à l'axe longitudinal de l'aéronef. La double poignée 58 traverse de façon étanche l'élément supérieur 20, de façon à être accessible de part et d'autre de celui-ci.

Comme l'illustre également la figure 2, une tige horizontale 62 relie la double poignée 58 à deux pènes 64 aptes à coulisser dans des rainures de guidage sensiblement verticales débouchant sur le bord horizontal supérieur de l'élément supérieur 20, en face de deux gâches 65 montées dans le bord supérieur horizontal de l'encadrement 18.

L'agencement qui vient d'être décrit permet, en actionnant la double poignée 58 depuis l'intérieur ou depuis l'extérieur de l'aéronef, de déplacer les pènes 64 de leur position verrouillée illustrée sur les figures 1 et 2, dans laquelle ces pènes font saillie dans les gâches 65, dans une position déverrouillée, dans laquelle ces pènes 64 sont totalement escamotés à l'intérieur de l'élément supérieur 20.

Pour complèter la description de l'issue de secours illustrée sur les figures 1 et 2, on observe que l'élément supérieur 20 comme l'élément inférieur 22 de la porte de cette issue de secours sont agencés de telle sorte que la pression qui règne habituellement en vol à l'intérieur du fuselage de l'aéronef applique chacun des éléments 20 et 22 contre la surface de l'encadrement 18 tournée vers l'intérieur de la cabine 12.

De façon plus précise, l'élément supérieur 20 comporte, sur son bord horizontal supérieur, deux butées 68 qui font saillie au-delà de ce bord, de façon à venir normalement en appui contre la face intérieure du bord supérieur horizontal de l'encadrement 18.

L'élément supérieur 20 de la porte de l'issue de secours comporte également, sur chacun de ses bords latéraux, une butée 70 qui fait saillie au-delà de ce bord de façon à venir normalement en appui contre les faces intérieures des bords latéraux de l'encadrement 18, dans la partie supérieure de ces bords.

Dans la partie basse de l'élément supérieur 20 de la porte, les tourillons 54 jouent également le rôle de butées qui viennent s'appliquer contre une partie en vis-à-vis des crochets d'ancrage 56, sous l'effet de la pression interne du fuselage de l'aéronef.

De façon comparable, l'élément inférieur 22 de la porte de l'issue de secours comporte sur son bord inférieur horizontal deux butées 72 qui font saillie vers le bas de façon à être normalement en appui contre des surfaces d'ancrage tournées vers l'intérieur de l'aéronef. Ces surfaces d'ancrage sont formées sur des pièces d'ancrage 74 fixées sur le bord inférieur de l'encadrement 18, comme l'illustre plus précisément la figure 1.

Le bord horizontal supérieur de l'élément inférieur 22 de la porte comprend également deux butées 76 qui font saillie vers le haut, de façon à être normalement en appui contre des surfaces d'ancrage tournées vers l'intérieur de l'aéronef. Ces surfaces d'ancrage sont formées sur des pièces d'ancrage 78 montées sur le bord inférieur de l'élément supérieur 20, comme l'illustre plus précisément la figure 1.

Pour compléter la description de l'issue de secours conforme à l'invention, il est précisé que l'élément supérieur 20 ainsi que l'élément inférieur 22 sont équipés de joints d'étanchéité (non representés), qui préservent de façon classique le confinement de la cabine 12 vis-à-vis de l'extérieur lorsque l'issue de secours est fermée.

Dans les conditions normales de vol, le moyen de verrouillage principal manoeuvré dans l'exemple de réalisation décrit par la double poignée 58 occupe sa position verrouillée. En revanche, le moyen de verrouillage secondaire actionné par la manette 30 est normalement déverrouillé. En effet, le maintien de l'élément inférieur 22 de la porte en position fermée est alors assuré par l'élément supérieur 20.

Dans le cas où une évacuation terrestre de l'aéronef est nécessaire, la manoeuvre de la double poignée de commande 58 du moyen de commande principal, depuis l'intérieur ou depuis l'extérieur de l'aéronef, libère immédiatement l'élément supérieur 20 de la porte, qui pivote par gravité vers l'intérieur de la cabine dans le sens de la flèche F2 sur la figure 1, autour des tourillons 54. Ce pivotement s'accompagne d'un effacement progressif vers le haut des pièces d'ancrage 78 sur lesquelles prennent appui les butées 76. Par conséquent, lorsque le pivotement de l'élément supérieur 20 atteint un angle prédéterminé, les pièces d'appui 78 sont totalement effacées par rapport aux butées 76. Etant donné que le moyen de verrouillage secondaire est alors déverrouillé, rien ne s'oppose plus au pivotement de l'élément inférieur 22 vers l'extérieur de l'aéronef dans le sens de la flèche F1 sur la figure 1. Il est à noter que ce pivotement, comme celui de l'élément supérieur 20 autour des tourillons 54, s'effectue de lui-même, par gravité.

Pour dégager complètement l'ouverture délimitée par l'encadrement 18, il ne reste plus qu'à extraire l'élément supérieur 20 en dégageant les tourillons 54 des crochets 56, afin de rejeter cet élément supérieur vers l'intérieur ou l'extérieur de la cabine 12. Ce dernier mouvement est symbolisé par la flèche F3 sur la figure 1.

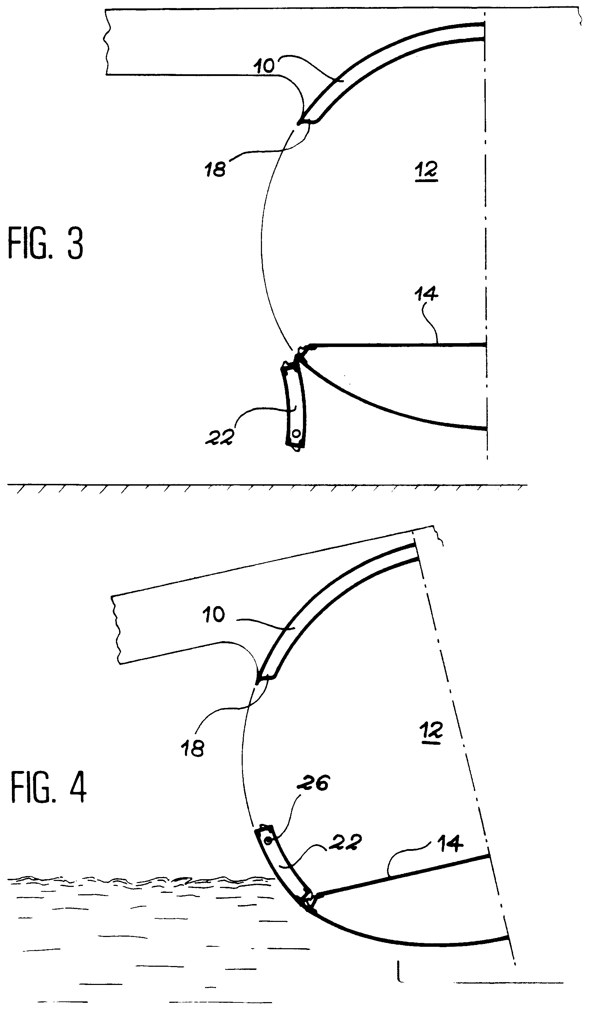

L'issue de secours conforme à l'invention présente alors la configuration illustrée sur la figure 3, dans laquelle une ouverture présentant par exemple une hauteur de 1,42 m (56 pouces) et une largeur d'environ 0,51 m (20 pouces) est libérée dans le fuselage de l'aéronef. De plus, cette ouverture présente un seuil situé au niveau du plancher 14 de la cabine. Dans cette première configuration, l'issue de secours conforme à l'invention satisfait donc bien à toutes les exigences de la règlementation en vigueur.

Dans le cas où un amerrissage d'un aéronef équipé d'issues de secours conformes à l'invention est prévisible, le personnel de cabine commande, avant cet amerrissage, le verrouillage du moyen de verrouillage secondaire de chaque issue de secours à l'aide des manettes 30.

Lorsque l'évacuation de l'aéronef doit être effectuée après amerrissage, l'ouverture des issues de secours est commandée, comme dans le cas d'une évacuation terrestre, en manoeuvrant la double poignée 58 selon le cas depuis l'intérieur ou depuis l'extérieur de l'aéronef.

Comme dans le cas d'une évacuation terrestre, le déverrouillage du moyen de verrouillage principal a pour conséquence un pivotement immédiat de l'élément supérieur 20 autour de l'axe horizontal matérialisé par les tourillons 54, sous l'effet de la gravité. Cependant, lorsque le pivotement de l'élément supérieur 20 dépasse l'angle prédéterminé pour lequel les butées 76 ne sont plus en appui contre les pièces d'ancrage 78, le basculement de l'élément inférieur 22 n'a pas lieu puisqu'on a pris soin auparavant de verrouiller cet élément à l'aide du moyen de verrouillage secondaire commandé par la manette 30.

L'ouverture de l'issue de secours, qui intervient après avoir dégagé l'élément supérieur 20 de ses appuis constitués par les crochets 56 et après avoir rejeté cet élément vers l'intérieur ou l'extérieur de la cabine, ne concerne donc dans ce cas que la partie supérieure de l'ouverture, normalement obturée par l'élément supérieur 20, alors que la partie inférieure de l'ouverture reste obturée par l'élément inférieur 22.

Comme l'illustre la figure 4, les dimensions de l'issue de secours conformes à l'invention sont alors, après son ouverture, de 0,91 m (36 pouces) pour sa hauteur et de 0,51 m (20 pouces) pour sa largeur. Par ailleurs, son seuil se situe à 0,51 m (20 pouces) au-dessus du niveau du plancher 14 de la cabine, au-dessus de la ligne de flottaison de l'appareil. La configuration présentée par l'issue de secours conforme à l'invention satisfait alors aux conditions imposées par la règlementation en vigueur pour l'évacuation d'un aéronef après amerrissage.

Bien entendu, l'invention n'est pas limitée au mode de réalisation qui vient d'être décrit à titre d'exemple, mais en couvre toutes les variantes sans sortir du cadre des reventications qui suivent. Ainsi, on comprendra aisément que le moyen de verrouillage principal comme le moyen de verrouillage secondaire qui ont été décrits peuvent prendre des formes différentes, notamment en ce qui concerne la commande des pènes de verrouillage, qui peut être manuelle et mécanique, ou électromagnétique et à la disposition de l'équipage. Des mécanismes de transmission à câbles peuvent notamment être envisagés pour le moyen de verrouillage secondaire.

## Revendications

1. Issue de secours à double configuration, pour l'évacuation d'une cabine (12) d'aéronef, comprenant un encadrement (18) délimitant une ouverture normalement obturée de façon étanche par une porte incluant un élément inférieur (22) et un élément supérieur (20), et des moyens de verrouillage (64,26) de la porte en position fermée, ces moyens de verrouillage comportant un moyen de verrouillage principal (64), interposé entre l'élément supérieur et l'encadrement, et un moyen de verrouillage secondaire (26), interposé entre l'élément inférieur et l'encadrement, le moyen de verrouillage principal et le moyen de verrouillage secondaire comprenant des pênes mobiles (64, 26) dont les déplacements assurent le verrouillage et le déverrouillage des éléments supérieur (20) et inférieur (22) de la porte sans déplacer ces éléments, de telle sorte qu'une libération du moyen de verrouillage principal (64) commande une ouverture des éléments inférieur et supérieur (22,20), lorsque le moyen de verrouillage secondaire est déverrouillé, et une ouverture de l'élément supérieur (20) seul, dont le seuil est situé au dessus de la ligne de flottaison de l'aéronef, lorsque le moyen de verrouillage secondaire est verrouillé.

2. Issue de secours selon la revendication 1, caractérisée par le fait que l'élément inférieur (22) est articulé sur un bord horizontal inférieur de l'encadrement (18), de façon à pouvoir pivoter vers l'extérieur de l'aéronef, après effacement d'au moins une surface d'ancrage (78) formée sur un bord horizontal inférieur de l'élément supérieur (20), lorsque le moyen de verrouillage secondaire (26) est déverrouillé.

3. Issue de secours selon la revendication 2, caractérisée par le fait que l'élément supérieur (20) est articulé sur l'encadrement (18), à proximité de l'élément inférieur (22), de façon à pouvoir pivoter vers l'intérieur de l'aéronef, lorsque le moyen de verrouillage principal (64) est libéré, ledit effacement d'au moins une surface d'ancrage (78) étant assuré par un pivotement de l'élément supérieur (20) au-delà d'un angle prédéterminé.

4. Issue de secours selon la revendication 3, caractérisée par le fait que l'élément supérieur (20) est articulé sur l'encadrement (18) par des mécanismes à tourillons (54,56) permettant d'extraire cet élément supérieur de l'encadrement, après un pivotement supérieur audit angle prédéterminé.

5. Issue de secours selon la revendication 4, caractérisée par le fait que les mécanismes à tourillons comprennent deux tourillons coaxiaux (54) qui font saillie au-delà des deux bords latéraux de l'élément supérieur (20) et deux crochets d'ancrage (56) fixés aux bords latéraux de l'encadrement (18) et sur lesquels prennent normalement appui chacun des tourillons (54).

6. Issue de secours selon l'une quelconque des revendications 2 à 5, caractérisée par le fait que l'élément inférieur (22) comporte, sur son bord inférieur et sur son bord supérieur, au moins une butée (72,76) apte à venir en appui contre une surface de l'encadrement tournée vers l'intérieur de la cabine et contre ladite surface d'ancrage (78), respectivement, sous l'effet de la pression interne de la cabine.

7. Issue de secours selon l'une quelconque des revendications précédentes, caractérisée par le fait que l'élément supérieur (20) comporte, sur son bord supérieur et sur chacun de ses bords latéraux, au moins une butée (68,70), normalement appliquée contre une surface de l'encadrement tournée vers l'intérieur de la cabine sous l'effet de la pression interne de la cabine.

8. Issue de secours selon l'une quelconque des revendications précédentes, caractérisée par le fait que le moyen de verrouillage principal (64) est accessible à la fois de l'intérieur et de l'extérieur de l'aéronef.

9. Issue de secours selon l'une quelconque des revendications précédentes, caractérisée par le fait que le moyen de verrouillage secondaire (26) est accessible de l'intérieur de l'aéronef.

10. Issue de secours selon l'une quelconque des revendications précédentes, caractérisée par le fait que le bord horizontal inférieur de l'encadrement (18) est situé au niveau d'un plancher (14) de la cabine.

## Claims

1. Double configuration emergency exit for evacuating an aircraft cabin (12) comprising a framing (18) delimiting an opening normally tightly sealed by a dorr, including one lower element (22) and one upper element (20), and means (64,26) for locking the door in a closed position, the locking means comprising one main locking device (64) inserted between the upper element and the framing, and one seccondary locking device (26) inserted between the lower element and the framing the main locking means and the secondary locking means comprising mobile bolts (64,26), whose displacements ensure the locking and unlocking of the upper (20) and lower (22) door elements without any displacement thereof so that a freeing of the main locking device (64) controls an opening of the lower and upper elements (22, 20) when the secondary locking device is unlocked, and an opening of solely the upper element (20), whose base is above the flotation line of the aircraft when the secondary locking device is locked.

2. Emergency exit according to claim 1, characterized in that the lower element (22) is joined to one lower horizontal edge of the framing (18) so as to be able to pivot outside the aircraft after at least one anchorage surface (78) formed on one lower horizontal edged of the upper element (22) has been removed when the secondary locking device (26) is unlocked.

3. Emergency exit according to claim 2, characterized in that the upper element (20) is joined to the framing (18) close to the lower element (22) so as to be able to pivot towards the inside of the aircraft when the main locking device (64) is freed, said removal of at least one anchorage surface (78) being ensured by a pivoting of the upper element (20) beyond a prefetermined angle,

4. Emergency exit according to claim 3, characterized in that the upper element (20) is joined to the framing (18) by latch-catch mechanisms (54,56) enabling this upper elem ent of the framing to be extracted following a pivoting greater than said predetermined angle

5. Emergency exit according to claim 4, characterized in that the latch-catch mechanisms include two coaxial latch-catches (54) which project beyond the two lateral edges of the upper element (20) and two anchorage hooks (56) fixed to the lateral edges of the framing (18) on which each of the latch-catches (54) normally take support.

6. Emergency exit according to any one of claims 2 to 5, characterized in that the lower element (22) comprises on its lower edge and on its upper edge at least one stop (72,76) able to abut against a surface of the framing orientated towards the inside of the cabin and against said anchorage surface (78) respectively under the effect of the internal pressure of the cabin.

7. Emergency exit according to any one of the preceding claims, characterized in that the upper element (20) comprises on its upper edge and on each of its lateral edges at least one stop (68, 70) normally applied against one surface of the framing orientated towards the inside of the cabin under the effect of the internal pressure of the cabin.

8. Emergency exit according to any one of the preceding claims, characterized in that the main locking device (64) is accessible from both inside and outside the aircraft.

9. Emergency exit according to any one of the preceding claims, characterized in that the secondary locking device (26) is accessible from inside the aircraft.

10. Emergency exit according to any one of the preceding claims, characterized in that the lower horizontal edge of the framing (18) is situated at the level of the floor (14) of the cabin.

## Patentansprüche

1. Notausgang mit doppeltem Aufbau zur Evakuierung einer Luftfahrzeug-Kabine (12), bestehend aus einem Rahmen (18), der eine Öffnung umschließt, die normalerweise mit einer Tür dicht verschlossen ist, welche ein unteres Element (22) und ein oberes Element (20) umfaßt, sowie aus Verriegelungsmitteln (64, 26) für die Tür in Schließstellung, wobei diese Verriegelungsmittel aus einem Hauptverriegelungsmittel (64), das zwischen dem oberen Element und dem Rahmen angeordnet ist, und einem Zweitverriegelungsmittel (26), das zwischen dem unteren Element und dem Rahmen angeordnet ist, bestehen, wobei das Hauptverriegelungsmittel und das Zweitverriegelungsmittel verschiebbare Riegel (64, 26) sind, mit deren Verschiebungen die Verriegelung und die Entriegelung des oberen Elements (20) und des unteren Elements (22) der Tür gewahrleistet werden, ohne diese Elemente zu bewegen, und zwar dergestalt, daß eine Freigabe des Hauptverriegelungsmittels (64) ein Öffnen des unteren und des oberen Elements (22, 20) bewirkt, wenn das Zweitverriegelungsmittel entriegelt ist, und nur ein Öffnen lediglich des oberen Elements (20), dessen Schwelle sich oberhalb der Ladewasserlinie des Luftfahrzeugs befindet, bewirkt, wenn das Zweitverriegelungsmittel verriegelt ist.

2. Notausgang nach Anspruch 1, **dadurch gekennzeichnet, daß** das untere Element (22) an einer unteren, waagerechten Kante des Rahmens (18) so angelenkt ist, daß es nach Beseitigung von mindestens einer Verankerungsfläche (78) an einer unteren, waagerechten Kante des oberen Elements (20) von dem Luftfahrzeug nach außen kippen kann, wenn das Zweitverriegelungsmittel entriegelt ist.

3. Notausgang nach Anspruch 2, **dadurch gekennzeichnet, daß** das obere Element (20) an dem Rahmen (18) nahe bei dem unteren Element (22) so angelenkt ist, daß es ins Innere des Luftfahrzeugs kippen kann, wenn das Hauptverriegelungsmittel (64) entriegelt ist, wobei die genannte Beseitigung von mindestens einer Verankerungsfläche (78) durch ein Kippen des oberen Elements (20) über einen vorher festgelegten Winkel hinaus gewahrleistet wird.

4. Notausgang nach Anspruch 3, **dadurch gekennzeichnet, daß** das obere Element (20) an dem Rahmen (18) durch Zapfenmechanismen (54, 56) angelenkt ist, die es ermöglichen, dieses obere Element nach einer Kippbewegung um mehr als den genannten festgelegten Winkel aus dem Rahmen herauszuziehen.

5. Notausgang nach Anspruch 4, **dadurch gekennzeichnet, daß** die Zapfenmechanismen aus zwei koaxialen Zapfen (54), die über die beiden Seitenkanten des oberen Elements (20) hinausragen, sowie aus zwei Verankerungshaken (56), die an den Seitenkanten des Rahmens (18) befestigt sind und auf denen die Zapfen (54) normalerweise jeweils aufliegen, bestehen.

6. Notausgang nach einem der Ansprüche 2 bis 5, **dadurch gekennzeichnet, daß** das untere Element (22) an seiner Unterkante und an seiner Oberkante jeweils mindestens einen Anschlag (72, 76) aufweist, der geeignet ist, unter der Wirkung des Innendrucks der Kabine in Anlage an einer Fläche des Rahmens, die dem Kabineninneren zugekehrt ist, bzw. an der genannten Verankerungsfläche (78) zu kommen.

7. Notausgang nach einem der vorherigen Ansprüche, **dadurch gekennzeichnet, daß** das obere Element (20) an seiner Oberkante und an jeder seiner Seitenkanten jeweils mindestens einen Anschlag (68, 70) aufweist, der unter der Wirkung des Innendrucks der Kabine normalerweise in Anlage an einer Fläche des Rahmens kommt, die dem Kabineninneren zugekehrt ist.

8. Notausgang nach einem der vorherigen Ansprüche, **dadurch gekennzeichnet, daß** das Hauptverriegelungsmittel (64) sowohl von innen als auch von außerhalb des Luftfahrzeugs zugänglich ist.

9. Notausgang nach einem der vorherigen Ansprüche, **dadurch gekennzeichnet, daß** das Zweitverriegelungsmittel (26) von innerhalb des Luftfahrzeugs zugänglich ist.

10. Notausgang nach einem der vorherigen Ansprüche, **dadurch gekennzeichnet, daß** die untere waagerechte Kante des Rahmens (18) sich in Höhe eines Fußbodens (14) der Kabine befindet.
